# EUROPÄISCHE PATENTSCHRIFT

(11) **EP 2 357 074 B1**
(45) Veröffentlichungstag und Bekanntmachung des Hinweises auf die Patenterteilung: **21.08.2013**
(21) Anmeldenummer: 10015023.4
(22) Anmeldetag: 26.11.2010
(51) Int. Cl.: B29C 65/40, B29C 47/12, E04D 5/14, E04D 13/15, E04D 15/04, B29C 47/30, B29C 47/02, B29C 47/70

(54) **Extruderschweissschuh und Handschweissextruder zur Herstellung einer Mehrfachschweissnaht**
Extruder welding shoe and hand welding extruder for producing a multiple weld seam
Semelle de soudage d'extrudeuse et extrudeuse de soudage à la main pour la fabrication d'une soudure multiple

(30) Priorität: 17.02.2010 DE 202010002418 U
(43) Veröffentlichungstag der Anmeldung: 17.08.2011
(73) Patentinhaber: Leister Technologies AG, 6056 Kägiswil (CH)
(72) Erfinder: Mettler, Beat, 6410 Goldau (CH); Von Wyl, Bruno, 6056 Kägiswil (CH); Niederberger, Adolf, 6056 Kägiswil (CH); Beeler, Roland, 6300 Zug (CH)
(74) Vertreter: Klocke, Peter

(56) Entgegenhaltungen:
- EP-A2- 0 060 482

## Beschreibung

Die Erfindung betrifft einen Extruderschweißschuh, vorzugsweise für einen Handschweißextruder, der an einer Extruderdüse einer Extrudereinheit ausgangsseitig befestigbar ist, mit einem Material-Einlass, einem Material-Auslass und einem sich dazwischen erstreckenden Material-Strömungskanal für ein zu extrudierendes plastifiziertes Kunststoffmaterial, und mit und mit einer innenliegenden Luftführung für Vorwärmluft, die einen Luft-Einlass, einen Luft-Auslass und einen diese verbindenden Luft-Strömungskanal aufweist. Die Erfindung betrifft außerdem einen Handschweißextruder, der mit einem derartigen Extruderschweißschuh ausgerüstet ist.

Für das Kunststoffschweißen von ebenen großflächigen Kunststoffteilen, beispielsweise von flexiblen Dichtungsbahnen auf Gebäudedächern, werden heute üblicherweise auf einem Fahrgestell angeordnete Heissluftgeräte (Schweißautomaten) oder an für derartige Schweißautomaten ungeeigneten Stellen Heisslufthandgeräte verwendet. Im Tiefbau oder Apparatebau kommen anstatt der Heissluftgeräte auch (Hand-)Schweißextruder zum Einsatz, die das Kunststoffschweißmaterial über einen Drahteinzug granuliert und dann einer Extruderschnecke zugeführt wird. Die Extruderschnecke drückt das Granulat in eine Schmelzkammer, wo es aufgeschmolzen wird und aus einer Extruderdüse als plastifizierter Strang austritt. Die miteinander zu verbindenden Teile werden mittels einer an dem Schweißautomaten oder an dem Handschweißextruder angebrachten Heißluftdüse auf die Schweißtemperatur vorgewärmt. Zur Bildung einer Schweißnaht aus dem aus der Extruderdüse austretenden Schmelzgut zwischen den zu verbindenden Kunststoffteilen wird ein Schweißschuh verwendet, der auf dem vorderen Endbereich der Extruderdüse in der Regel lösbar befestigt ist. Für unterschiedliche Anwendungszwecke werden je nach Form der zu erzeugenden Schweißnaht entsprechend geformte Schweißschuhe eingesetzt. Im Bereich vor dem Schweißschuh wird über eine Vorwärmdüse heiße Luft aus einem Warmlufterzeuger zugeführt, um den zu verschweißenden Bereich leicht zu plastifizieren um damit eine bessere Verbindung der Schweißnaht mit den zu verbindenden Teilen zu erreichen.

Aus dem Stand der Technik sind eine Vielzahl von unterschiedlichen Extruderschweißschuhen bekannt. Bei handelsüblichen Schweißschuhen besteht der in Strömungsrichtung des plastifizierten Kunststoffmaterials für die Schweißnaht vordere Abschnitt des Schweißschuhs aus Kunststoff, beispielsweise aus Teflon, während der hintere Abschnitt, der mit der Extruderdüse verbunden ist, wegen der Temperaturleitfähigkeit aus Metall besteht. An dem hinteren Abschnitt ist der Material-Einlass, an dem vorderen Abschnitt ein Material-Auslass des Schweißschuhs vorgesehen, die über einen Material-Strömungskanal miteinander verbunden sind, der eine für das Fließverhalten des Schmelzgutes günstige Form aufweist. An dem vorderen Abschnitt sind in der Regel noch zusätzliche Mittel zur Formgebung der Schweißnaht, d.h. zur Formung des aus dem Material-Auslass austretenden extrudierten plastifizierten Kunststoffmaterials angeordnet. Beispielhaft wird auf die Druckschrift EP 0 060 482 A2 verwiesen.

Diese Schrift offenbart ein Extruderschweißgerät zum Schweißen von dickwandigen Teilen aus thermoplastischem Kunststoff, mit einem Mundstück, das einen Materialauslass zur Abgabe des plastifizierten Extrudates und eine Warmgaseinrichtung zum Vorwärmen der Schweißfuge durch gerichtete warme Gasstrahlen aufweist, wobei die Warmgaseinrichtung mit zwei Austrittsöffnungen für die Warmgasstrahlen ausgeführt ist, die in Schweißrichtung vor dem Materialauslass beidseitig des Materialauslasses angeordnet sind. Es gibt eine Reihe von Anwendungsfällen, bei denen eine Doppelschweißnaht erforderlich ist, die zwei parallel zueinander verlaufende, in einem bestimmten Abstand nebeneinander angeordnete Einzelschweißnähte umfasst. Dies ist beispielsweise der Fall, wenn Kunststoffprofile auf Kunststoffbahnen oder Kunststoffplatten dauerhaft lagestabil zu befestigen sind. Ein solcher Anwendungsfall ist beispielsweise das Schweißen von zusätzlichen vertikalen Kunststoffprofilen auf Kunststoffdächern, wie es in einigen Ländern üblich ist. Dazu wird das Kunststoffprofil auf die Dichtungsbahn oder die Deckplatten aufgeschweißt. Die Schweißung muss weder dicht sein noch wird sie mechanisch stark belastet. Heute werden derartige Kunststoffdachprofile in zwei Arbeitsgängen mit einem Heisslufthandgerät und Schnellschweißdüsen geschweißt, d.h. die zwei an den beiden Längskanten der Kunststoffprofile auszubildenden Schweißnähte werden nacheinander von Hand ausgeführt. Die Herstellung einer solchen Doppelschweißnaht ist somit zeitaufwändig und damit kostenintensiv.

Der Erfindung liegt die Aufgabe zu Grunde, eine Möglichkeit vorzuschlagen, die eine rationellere Längskantenverschweißung von Kunststoffprofilen mit anderen Kunststoffteilen mittels Schweißnähten erlaubt.

Diese Aufgabe wird erfindungsgemäß durch einen Extruderschweißschuh mit den Merkmalen des Anspruchs 1 sowie durch einen Handschweißextruder mit den Merkmalen des nebengeordneten Anspruchs 10 gelöst. Weitere vorteilhafte Ausgestaltungen sind den jeweils rückbezogenen Unteransprüchen zu entnehmen.

Kerngedanke der Erfindung ist es, die beiden zu erzeugenden parallel nebeneinander verlaufenden Kunststoffschweißnähte in einem einzigen Arbeitsgang zeitgleich miteinander herzustellen. Dies wird erfindungsgemäß durch einen Extruderschweißschuh ermöglicht, der einen Material-Einlass und mindestens zwei quer zu der vorgesehenen Schweißrichtung voneinander beabstandete Material-Auslässe aufweist, die mit dem Material-Einlass verbunden sind. Dementsprechend weist bei dem erfindungsgemäßen Schweißschuh der Material-Strömungskanal mindestens eine Material-Verzweigungsstelle auf, die den Material-Strömungskanal in Material-Strömungszweigkanäle teilt, die jeweils einen Material-Auslass aufweisen. Der Strang aus plastifiziertem Kunststoffmaterial, der aus der Extruderdüse einer Extrudereinheit aus- und in den Material-Einlass des an der Extruderdüse ausgangsseitig befestigten Extruderschweißschuhs eintritt, wird in dem an den Material-Einlass anschließenden Material-Strömungskanal bis zu der Material-Verzweigungsstelle einstrangig geführt und dort in mindestens zwei Teilstränge aufgeteilt. Die Teilstränge werden von da aus weiter über die von der Material-Verzweigungsstelle ausgehenden Material-Strömungszweigkanälen zu den jeweiligen Material-Auslässen transportiert, wo das plastifizierte Kunststoffmaterial austritt und von dem Extruderschweißschuh zu zwei Schweißnähten geformt wird.

Der erfindungsgemäße Extruderschweißschuh ist im Wesentlichen aus einem metallischen und damit gut wärmeleitenden Material hergestellt, so dass der Material-Strömungskanal und der Luft-Strömungskanal in gutem Wärmekontakt miteinander stehen. Dies hat den Vorteil, dass die Vorwärmluft den Extruderschweißschuh temperiert, so dass das plastifizierte Kunststoffmaterial seine Plastizität im Wesentlichen unverändert beibehält und damit leicht fließfähig bleibt. Außerdem kann damit der Extruderschweißschuh vor dem Schweißvorgang vorgewärmt werden, wodurch in dem Material-Strömungskanal bzw. den Material-Verzweigungskanälen nach dem Schweißvorgang erstarrtes Kunststoffmaterial wieder fließfähig wird.

Der Extruderschweißschuh weist eine innen liegende Luftführung für die Vorwärmluft auf, wobei die Luftführung einen Luft-Einlass, einen Luft-Auslass und einen diese verbindenden Luft-Strömungskanal aufweist. In einer bevorzugten Ausführungsform der Erfindung weist der Luft-Strömungskanal mindestens eine Luft-Verzweigungsstelle auf, die den Luft-Strömungskanal in Luft-Strömungszweigkanäle aufteilt, die jeweils einen Luft-Auslass aufweisen. Jedem Material-Auslass ist damit zweckmäßigerweise ein Luft-Auslass zuordenbar. Die Vorwärmluft wird dem Luft-Einlass von einem Warmlufterzeuger der Extrudereinheit zugeführt. Die beiden Luft-Auslässe des Extruderschweißschuhs sind in Schweißrichtung vor den mindestens zwei Material-Auslässen mit einem möglichst minimalen Abstand angeordnet und so dimensioniert, dass sie die Schweißstellen vor den Material-Auslässen gleichzeitig vorwärmen können.

Es hat sich als günstig erwiesen, den Material-Strömungskanal und/oder den Luft-Strömungskanal symmetrisch zu der Längsachse der Extruderdüse zu verzweigen. Durch die symmetrische Verzweigung wird in den verschiedenen Material-Strömungszweigkanälen ein in der Menge und im Fließverhalten gleicher Durchsatz des plastifizierten Kunststoffmaterials erreicht. Sollten die Material-Strömungszweigkanäle von der Material-Verzweigungsstelle bis zu den Material-Auslässen eine unterschiedliche Länge aufweisen, so kann dies durch eine Querschnittsänderung falls notwendig kompensiert werden.

Gemäß einer bevorzugten Weiterbildung der Erfindung weist der erfindungsgemäße Extruderschweißschuh mehrere in Strömungsrichtung des plastifizierten Kunststoffmaterials hintereinander angeordnete Material-Verzweigungsstellen und/oder Luft-Verzweigungsstellen auf. Auch in einem solchen Fall wird eine symmetrische Anordnung der Material-Verzweigungsstellen bzw. der Luft-Verzweigungsstellen in dem Extruderschweißschuh bevorzugt.

Generell können bei allen Ausführungsformen des erfindungsgemäßen Extruderschweißschuhs der Material-Strömungskanal, die Material-Strömungszweigkanäle, der Luft-Strömungskanal sowie gegebenenfalls die Luft-Strömungszweigkanäle in einem beliebigen räumlichen Winkel zueinander und/oder zu den Ein- und Auslässen für das Material und die erwärmte Luft angeordnet sein.

Vorzugsweise ist der Extruderschweißschuh an der Extruderdüse in Umfangsrichtung drehbar befestigt. Dies ermöglicht insbesondere bei der Verwendung des erfindungsgemäßen Extruderschweißschuhs in Verbindung mit einem handgeführten Handschweißextruder, den Schweißschuh bei schwer zu erreichenden Schweißstellen in der Ausrichtung gegenüber der Extrudereinheit zu verändern, um dem Benutzer die Handhabung zu erleichtern.

Um bei einem erfindungsgemäßen Extruderschweißschuh mit innenliegender Luftführung für die Vorwärmluft die Drehung des Extruderschweißschuhs gegenüber der Extruderdüse zu erleichtern, ist gemäß einer zweckmäßigen Weiterbildung der Erfindung der Luft-Einlass mit dem Warmlufterzeuger des Handschweißextruders über eine einstellbare Luftzuführungsleitung verbunden. Die Luftzuführungsleitung kann beispielsweise ein flexibler Wellschlauch oder eine flexible Gelenkgliederleitung aus Metall sein.

In einer bevorzugten Variante des erfindungsgemäßen Extruderschweißschuhs weist die mindestens eine Material-Verzweigungsstelle eine Klinge zur Spaltung des strömenden Kunststoffmaterials auf. Die Klinge ragt bei einer Material-Verzweigungsstelle entgegen der Fließrichtung des plastischen Kunststoffmaterials in den Materialströmungskanal und gegebenenfalls bei weiteren darauf folgenden Material-Verzweigungsstellen entsprechend in die Material-Strömungszweigkanäle hinein und spaltet den jeweiligen plastifizierten Strang aus aufgeschmolzenem Kunststoffmaterial bereits vor dem Erreichen der jeweiligen Material-Verzweigungsstelle in Teilstränge auf. Durch die scharfe Klinge wird die Spaltung des Stranges aus strömendem Kunststoffmaterial gegenüber einer Spaltung direkt an der stumpferen Verzweigungsstelle erleichtert.

Die Qualität einer Schweißnaht hängt unter anderem auch von der Geometrie der miteinander zu verschweißenden Kunststoffteile ab. In der Regel muss für eine dauerhafte und hoch belastbare Schweißverbindung die Schweißnaht in ihrer Geometrie an die zu verbindenden Kunststoffteile angepasst werden. Um dies zu ermöglichen, weisen die Material-Auslässe des erfindungsgemäßen Extruderschweißschuhs in einer bevorzugten Ausführungsform austauschbare Material-Austrittsdüsen auf. Die Material-Austrittsdüsen können gleiche Querschnittsflächen kombiniert mit unterschiedlichen Geometrien oder unterschiedliche Querschnittsflächen kombiniert mit gleichen Geometrien aufweisen. Sie können jedoch auch in Querschnittsfläche und Geometrie gänzlich unterschiedlich ausgebildet sein.

Zweckmäßigerweise sind die Material-Austrittsdüsen an mindestens einer auswechselbaren Material-Düsenplatte angeordnet, die auch mehrere Material-Austrittsdüsen zusammenfassen kann. Eine derartige Material-Düsenplatte mit einer oder mehr Material-Austrittsdüsen kann gegenüber einzelnen Material-Austrittsdüsen einfacher und schneller ausgetauscht werden. Außerdem können an der Material-Düsenplatte, die vorzugsweise aus einem hoch temperaturbeständigen Kunststoff hergestellt ist, noch Mittel zur Formung des ausgetretenen, die Schweißnähte bildenden aufgeschmolzenen Kunststoffmaterials angeordnet sein. Prinzipiell kann die Material-Düsenplatte abhängig von ihrer Größe neben den Material-Austrittsdüsen noch Luft-Austrittsdüsen aufweisen, die die Luft-Auslässe in Querschnittsfläche und Geometrie variieren und an die jeweiligen Material-Austrittsdüsen anpassen.

Für saubere, sichere und geradlinig verlaufende Schweißnähte müssen die Material-Auslässe bzw. die an den Material-Auslässen angeordneten Material-Austrittsdüsen parallel zu den zu verschweißenden Kanten der zu verbindenden Kunststoffteile geführt werden. Um dies sicherzustellen, weist der vorgeschlagene Extruderschweißschuh vorzugsweise Führungseinrichtungen auf, die in Kontakt mit einem der Kunststoffteile gebracht, den Extruderschweißschuh exakt positionieren und bei Bewegung des Handschweißextruders gleichmäßig und geradlinig entlang dem Verlauf eines der Kunststoffteile führen. Dazu kann der Extruderschweißschuh beispielsweise zwei oder mehr Ausleger aufweisen, die sich in Schweißrichtung erstrecken und sich mit voneinander beabstandeten Rollen an einem der zu verbindenden Kunststoffteile, z.B. an einem Kunststoffprofil abstützen und zentrieren.

Der erfindungsgemäße Handschweißextruder zum Verbinden von Kunststoffteilen weist einen Extruderschweißschuh gemäß einem der vorstehenden Ansprüche auf. Bei einer bevorzugten Ausführungsform der Erfindung ist der Handschweißextruder auf einem antreibbaren, vorzugsweise federnden Fahrgestell angeordnet und stützt sich über den Extruderschweißschuh und über das Fahrgestell auf der Unterlage, beispielsweise auf flexiblen Dichtungsbahnen ab. Dabei kann das Fahrgestell als Teil des Extruderschweißschuhs ausgebildet oder eigenständig ausgeführt und mit dem Extruderschweißschuh fest oder lösbar verbunden sein. Der Handschweißextruder weist zweckmäßigerweise bei einer vorteilhaften Ausführungsform einen Führungsholm mit einem Handgriff auf, mit dem der Anwender den Handschweißextruder halten und führen, insbesondere die Bewegungsrichtung des Handschweißextruders auch beim Schweißvorgang einfach und genau beeinflussen kann. Der Führungsholm und/oder der Handgriff weisen günstigerweise gelenkige Verbindungsstellen auf, so dass die Position des Handgriffes je nach Schweißposition und Körpergröße des Anwenders vorzugsweise werkzeuglos einstellbar ist, um eine bequeme Handhabung zu ermöglichen.

Der Handsschweißextruder kann prinzipiell von Hand und/oder mittels einem Motor angetrieben werden, wobei die Vortriebsgeschwindigkeit des Fahrgestells in jedem Fall durch den Anwender beeinflussbar ist. Bei einer bevorzugten Ausführungsform des erfindungsgemäßen Handschweißextruders ist das Fahrgestell motorisch, beispielsweise mittels einem Elektromotor angetrieben, sodass die Vortriebsgeschwindigkeit des Fahrgestells zum einen frei wählbar und zum anderen unabhängig von der Bewegungsgeschwindigkeit des Anwenders ist. Durch die so erreichte konstante Schweißgeschwindigkeit führt zu einer qualitativ hochwertigen, d. h. fehlerfreien Doppelschweißnaht. Ideal ist es, wenn die Motordrehzahl des Elektroantriebs und damit die Vortriebsgeschwindigkeit des Fahrgestells von den Betriebsparametern der Extrudereinheit des Handschweißextruders bestimmt und abhängig von diesen eingestellt oder geregelt wird. Ein weiterer Vorteil des motorischen Antriebs ist, dass in diesem Fall keine manuelle Nachführung des Handsschweißextruder erforderlich ist, da sich das Fahrgestell mit dem Handschweißextruder auf diese Weise selbstständig und ohne Richtungsänderung mittels den Führungseinrichtungen des Extruderschweißschuhs bewegt, zum Beispiel entlang den Überlappungskanten der Dichtungsbahnen und/oder gegebenenfalls dem mit den Dichtungsbahnen zu verschweißenden Kunststoffprofil bewegt.

Bei einer anderen vorteilhaften Ausführungsform der Erfindung weist der Handschweißextruder eine Abwickelvorrichtung für einen Kunststoffschweißdraht auf, der auf einer Haspel aufgewickelt bereitgestellt wird. Die Abwickelvorrichtung ist günstigerweise auf der dem Extruderschweißschuh abgewandten Seite der Extrudereinheit des Handsschweißextruders angeordnet. Bei in etwa senkrecht stehendem Handschweißextruder ist sie oberhalb der Extrudereinheit an einem dabei im wesentlichen waagrecht verlaufenden Querholm des Führungsholms drehbar befestigt. Die Haspel steht in dieser Position des Handschweißextruders aufrecht, so dass der Kunststoffschweißdraht problemlos ohne zusätzliche Maßnahmen dem Drahteinzug der Extrudereinheit nach unten zugeführt werden kann. Die Abwickelvorrichtung weist vorteilhafterweise eine Bremseinrichtung, beispielsweise eine Rollenbremse oder dergleichen auf, die wirkungsvoll verhindert, dass zuviel Schweißdraht von der Haspel abgewickelt wird. Die Bremseinrichtung hält zudem den Kunststoffschweißdraht zwischen der Haspel und dem Drahteinzug weitgehend gespannt. Nachfolgend wird die Erfindung anhand eines in der Zeichnung dargestellten Ausführungsbeispiels näher erläutert. Die Figuren der Zeichnung dienen lediglich zur Illustration einer oder mehreren bevorzugten Ausführungen und schränken der Erfindung nicht auf die abgebildeten Ausführungsbeispiele ein. Weitere Merkmale der Erfindung können sich aus der folgenden Beschreibung der Ausführungsbeispiele der Erfindung in Verbindung mit den Ansprüchen und den Figuren der beigefügten Zeichnung ergeben, wobei die einzelnen Merkmale der Erfindung für sich allein oder zu mehreren bei unterschiedlichen Ausführungsformen der Erfindung verwirklicht sein können. Es zeigen in schematischer Darstellung:
- Figur 1: eine Extrudereinheit eines erfindungsgemäßen Handschweiß-extruders mit einem erfindungsgemäßen Extruderschweißschuh in einer Achsschnittdarstellung;
- Figur 2: den Extruderschweißschuh aus Figur 1 in einer Längsschnittdarstellung mit separierten Material-Düsenplatten;
- Figur 3: den Extruderschweißschuh aus Figur 2 in Seitenansicht mit aufgesetzten Material-Düsenplatten;
- Figur 4: den Extruderschweißschuh aus Figur 1 ohne Düsenplatten mit Blick auf die Unterseite;

- Figur 5: den Handschweißextruder aus Figur 1 beim Verbinden eines Kunststoffprofils mit einer Kunststoffbahn in einer Längsschnittdarstellung;
- Figur 6: eine Variante des in Figur 3 dargestellten Extruderschweißschuhs mit Führungseinrichtungen;
- Figur 7: eine Variante des in der Figur 1 dargestellten Handschweiß-extruders, mit einer an der Material-Verzweigungsstelle ange-ordneten Klinge; und
- Figur 8: einen erfindungsgemäßen Handschweißextruder in perspektivischer Ansicht.

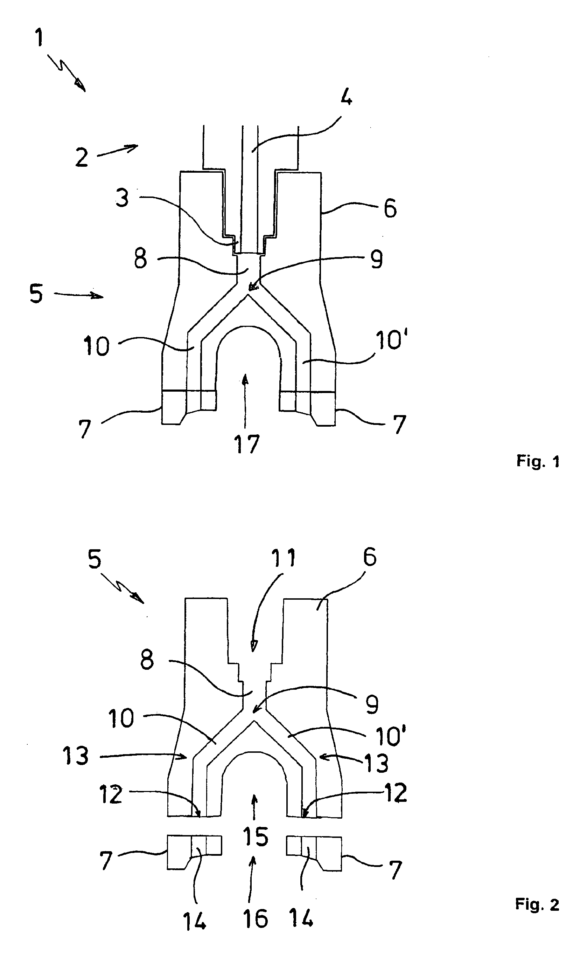

Die Figuren 1, 2 zeigen eine Extrudereinheit 2 des erfindungsgemäßen Handschweißextruders 1 in einer Längsschnittdarstellung, die eine Extruderdüse 3 mit einem zentrischen Förderkanal 4 aufweist. Ausgangsseitig ist an der Extruderdüse 3 ein Extruderschweißschuh 5 die Extruderdüse 3 außen übergreifend angeordnet. Der Extruderschweißschuh 5 weist einen Schweißschuhkörper 6 und zwei Material-Düsenplatten 7 auf. Die Figur 2 zeigt den Extruderschweißschuh 5 aus der Figur 1 mit separierten Material-Düsenplatten 7. An den Förderkanal 4 der Extrudereinheit 2 schließt ein Material-Strömungskanal 8 an, der an einer Material-Verzweigungsstelle 9 in zwei Material-Strömungszweigkanäle 10, 10' verzweigt. Der Material-Strömungskanal 8 weist eingangsseitig einen Material-Einlass 11, die Material-Strömungszweigkanäle 10, 10', ausgangsseitig je einen Material-Auslass 12 auf.

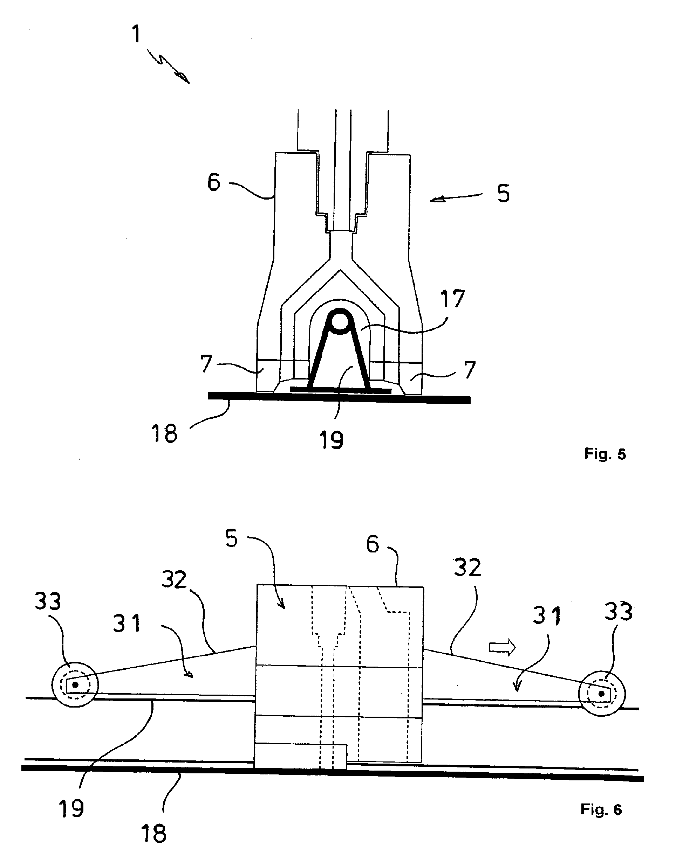

Der Material-Strömungskanal 8 erstreckt sich von dem Material-Einlass 11 bis zu der Material-Verzweigungsstelle 9 konzentrisch zu dem Förderkanal 4 der Extrudereinheit 2. An der Material-Verzweigungsstelle 9 verzweigt er V-förmig in die Material-Strömungszweigkanäle 10, 10'. Die Material-Strömungszweigkanäle 10, 10' weisen jeweils etwa mittig zwischen der Material-Verzweigungsstelle 9 und dem jeweiligen Materialausgang 12 eine Knickstelle 13 auf. Ab der Knickstelle 13 verlaufen die Material-Strömungszweigkanäle 10, 10' wieder parallel zu dem Material-Strömungskanal 8 und dem Förderkanal 4 weiter. Die auf den Schweißschuhkörper 6 ausgangsseitig aufgesetzte Material-Düsenplatte 7 weist zwei den Material-Auslässen 12 zugeordnete Material-Austrittsdüsen 14 auf. Sie ist an dem Schweißschuhkörper 6 beispielsweise durch in der Zeichnung nicht dargestellte Schrauben leicht lösbar befestigt. Der Schweißschuhkörper 6 weist zwischen den abgewinkelten Material-Strömungszweigkanälen 10, 10' eine im Querschnitt U-förmige Ausnehmung 15 auf, die mit einem Zwischenraum 16 zwischen den beiden Material-Düsenplatten 7 einen Freiraum 17 zur Aufnahme eines in der Figur 5 dargestellten, mit einer Kunststoffbahn 18 zu verbindenden Kunststoffprofils 19 dient. Aus der Figur 5 ist ersichtlich, dass die Material-Düsenplatten 7 während des Schweißvorgangs an dem Kunststoffprofil 19 in seitlich Anlage sind und das Kunststoffprofil 19 gegen die Kunststoffbahn 18 pressen.

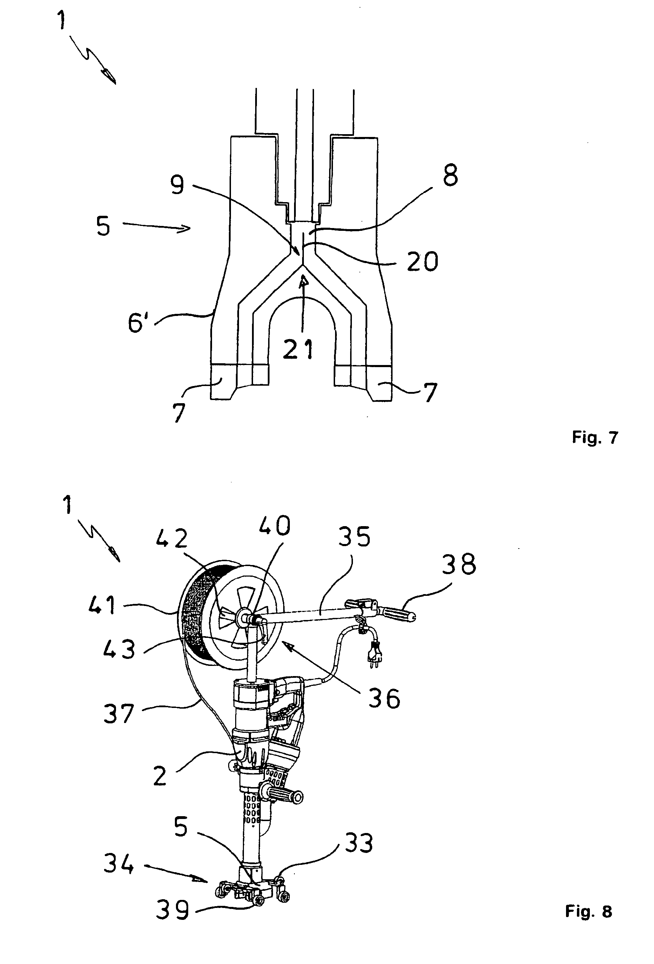

Bei dem in der Figur 7 dargestellten Handschweißextruder 1 unterscheidet sich der Schweißschuhkörper 6 von dem in der Figur 1 dargestellten Schweißschuhkörper 6 durch eine an der Material-Verzweigungsstelle 9 angeordnete Klinge 20 zur Spaltung eines in der Zeichnung nicht dargestellten Stranges aus plastifiziertem Kunststoffmaterial. Die Klinge 20 erstreckt sich von einer Spitze 21 der Material-Verzweigungsstelle 9 entgegen der Förderrichtung des plastifizierten Kunststoffmaterials bis in den Material-Strömungskanal 8.

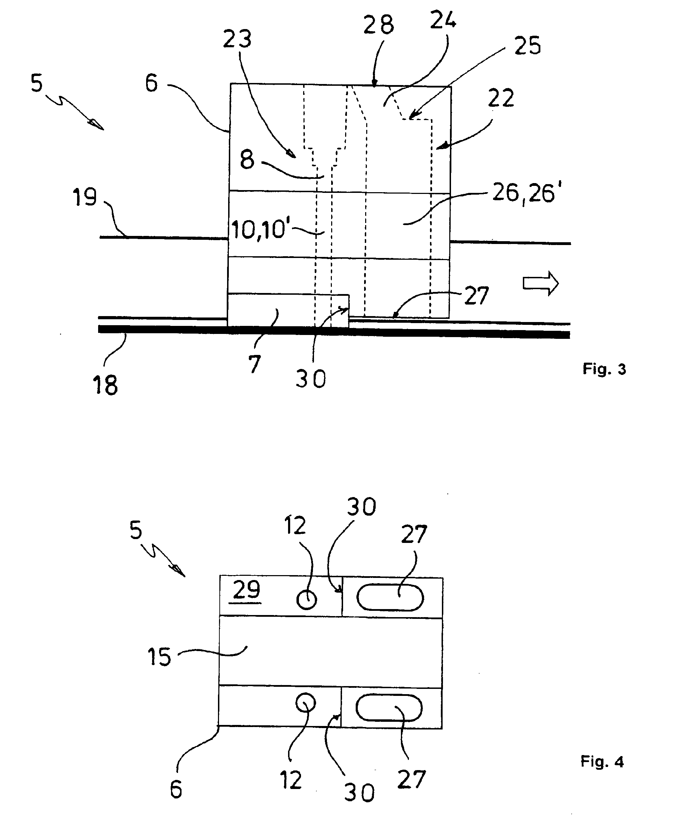

Wie die Figur 3 zeigt, ist in Schweißrichtung vor dem Material-Strömungskanal 8 und den Material-Strömungszweigkanälen 10, 10' eine Luftführung 22 angeordnet, die in den Achsschnittdarstellungen der Figuren 1, 2, 7 nicht sichtbar ist, da der Schnitt quer zu der Schweißrichtung durch eine Materialführung 23 verläuft, die den Material-Strömungskanal 8, die Material-Verzweigungsstelle 9 sowie die Material-Strömungszweigkanäle 10, 10' umfasst. Die Luftführung 22 ist in der Figur 3 zusammen mit einer Materialführung 23 dargestellt. Sie ist im Wesentlichen äquivalent zu der Materialführung 23 ausgebildet. Sie weist einen Luft-Strömungskanal 24 und mindestens eine Luft-Verzweigungsstelle 25 auf, die den Luft-Strömungskanal 24 in Luft-Strömungszweigkanäle 26, 26' aufteilt, die jeweils einen Luft-Auslass 27 aufweisen. Die Luftführung 22 verbindet die Luft-Auslässe 27 mit einem Luft-Einlass 28 des Luft-Strömungskanals 24.

Die Figur 4 zeigt den Extruderschweißschuh 5 aus der Figur 1 mit Blick auf die Unterseite 29 des Schweißschuhkörpers 6. Beidseits der Ausnehmung 15 des Schweißschuhkörpers 6 sind jetzt die Material-Auslässe 12, die im Querschnitt rund ausgebildet sind, und die Luft-Auslässe 27, die in Schweißrichtung oval ausgebildet sind, zu erkennen. Der Schweißschuhkörper 6 weist eine Stufe 30 zwischen den Luft-Auslässen 27 und den Material-Auslässen 12 auf. Die Stufe 30 ist auch in der Figur 3 ersichtlich und ermöglicht die Material-Düsenplatten 7 mit zu den Material-Auslässen 12 fluchtenden Material-Austrittsdüsen 14 anzuordnen. Die Material-Düsenplatten 7 weisen eine Dicke auf, die größer ist als die Höhe der Stufe 30, so dass die Luft-Auslässe 27 beim Schweißvorgang einen vertikalen Abstand zu der Kunststoffbahn 18 und zu dem Kunststoffprofil 19 aufweisen.

Die Figur 6 zeigt eine Variante des in der Figur 3 dargestellten Extruderschweißschuhs 5 mit daran angeordneten Führungseinrichtungen 31. Die Führungseinrichtungen 31 weisen sich in und entgegen der Schweißrichtung erstreckende Ausleger 32 mit daran angeordneten Rollen 33 auf. Die Führungseinrichtung 31 ist starr mit dem Extruderschweißschuh 5 verbunden und stützt sich federnd an dem mit der Kunststoffbahn 18 zu verschweißenden Kunststoffprofil 19 ab. Die Führungseinrichtung 31 führt den Extruderschweißschuh 5 lagegenau parallel zu dem Kunststoffprofil 19, wobei die Führungseinrichtungen 31 mittig wie dargestellt oder seitlich an dem Schweißschuhkörper 6 befestigt sein können.

Die Figur 8 zeigt einen erfindungsgemäßen Handschweißextruder 1 in einer perspektivischen Darstellung. Der Handschweißextruder 1 ist auf einem angetriebenen, vorzugsweise federnden Fahrgestell 34 angeordnet und stützt sich über den Extruderschweißschuh 5 und über das Fahrgestell 34 auf einer in der Zeichnung nicht dargestellten Unterlage, beispielsweise auf flexible Dichtungsbahnen ab. Dabei ist das Fahrgestell 34 als Teil des Extruderschweißschuhs 5 ausgebildet und weist vier an dem Extruderschweißschuh 5 befestigte Räder 39 auf. Der Handschweißextruder weist zudem einen Führungsholm 35 mit einem Handgriff 38 auf, mit dem ein in der Figur nicht gezeigter Anwender den Handschweißextruder 1 halten und führen kann. Der Führungsholm 35 ist mit einem Ende an der Extrudereinheit 2 starr befestigt und trägt an seinem anderen Ende den Handgriff 38. Der Führungsholm 35 ist gelenkig ausgebildet und weist ein Gelenk 40 auf, mit dem sich der Führungsholm 35 abwinkeln lässt. Auf diese Weise kann der Handgriff 38 des Führungsholms 35 ergonomisch vorteilhaft gegenüber der Extrudereinheit 2 eingestellt werden, um den Handschweißextruder 1 bequem halten und führen zu können.

Der Handschweißextruder 1 weist außerdem eine Abwickeleinrichtung 36 für einen Kunststoffschweißdraht 37 auf, der von einer Haspel 41 abgewickelt wird. Die Abwickelvorrichtung 36 ist auf der dem Extruderschweißschuh 5 abgewandten Seite der Extrudereinheit 2 angeordnet und auf einem quer zu dem Führungsholm 35 verlaufenden Querholm 42 des Führungsholms 35 drehbar aufgenommen. Der Querholm 42 ist im Bereich des Gelenkes 40 angeordnet und wirkt mit einer Spannvorrichtung 43 zusammen, welche eine in der Zeichnung nicht sichtbare Gelenkachse des Gelenkes 40 des Führungsholms 35 bildet. Die Abwickelvorrichtung 36 weist eine in der Figur 7 nicht sichtbaren Bremseinrichtung für die Haspel 41 auf, die den Kunststoffschweißdraht 37 weitgehend gespannt hält.

## Patentansprüche

1. Extruderschweißschuh (5), vorzugsweise für einen Handschweißextruder (1), der an einer Extruderdüse (3) einer Extrudereinheit (2) ausgangsseitig befestigbar ist, mit einem Material-Einlass (11), einem Material-Auslass (12) und einem sich dazwischen erstreckenden Material-Strömungskanal (8) für ein zu extrudierendes plastifiziertes Kunststoffmaterial, und mit einer innenliegenden Luftführung (22) für Vorwärmluft, die einen Luft-Einlass (28), einen Luft-Auslass (27) und einen diese verbindenden Luft-Strömungskanal (24) aufweist, **dadurch gekennzeichnet, dass** der Material-Strömungskanal (8) mindestens eine Material-Verzweigungsstelle (9) aufweist, die den Material-Strömungskanal (8) in Material-Strömungszweigkanäle (10, 10') teilt, die jeweils einen Material-Auslass (12) aufweisen.

2. Extruderschweißschuh nach Anspruch 1, **dadurch gekennzeichnet, dass** der Luft-Strömungskanal (24) mindestens eine Luft-Verzweigungsstelle (25) aufweist, die den Luft-Strömungskanal (24) in Luft-Strömungszweigkanäle (26, 26') aufteilt, die jeweils einen Luft-Auslass (27) aufweisen.

3. Extruderschweißschuh nach einem der vorstehenden Ansprüche, **dadurch gekennzeichnet, dass** der Material-Strömungskanal (8) und/oder der Luft-Strömungskanal (24) symmetrisch zu der Längsachse der Extruderdüse (3) verzweigen.

4. Extruderschweißschuh nach einem der vorstehenden Ansprüche, **dadurch gekennzeichnet, dass** in Strömungsrichtung des plastifizierten Kunststoffmaterials mehrere Material-Verzweigungsstellen (9) und/oder Luft-Verzweigungsstellen (25) hintereinander angeordnet sind.

5. Extruderschweißschuh nach einem der vorstehenden Ansprüche, **dadurch gekennzeichnet, dass** der Extruderschweißschuh (5) an der Extruderdüse (3) in Umfangsrichtung drehbar befestigbar ist.

6. Extruderschweißschuh nach einem der vorstehenden Ansprüche, **dadurch gekennzeichnet, dass** der Luft-Einlass (28) mit einem Warmlufterzeuger des Handschweißextruders (1) über eine einstellbare Luftzuführungsleitung verbunden ist.

7. Extruderschweißschuh nach einem der vorstehenden Ansprüche, **dadurch gekennzeichnet, dass** die Material-Verzweigungsstelle (9) eine Klinge (20) zur Spaltung des strömenden Kunststoffmaterials aufweist.

8. Extruderschweißschuh nach einem der vorstehenden Ansprüche, **dadurch gekennzeichnet, dass** die Material-Auslässe (12) eine austauschbare Material-Austrittsdüse (14) aufweisen, die vorzugsweise an einer wechselbaren Material-Düsenplatte (7) angeordnet sind.

9. Extruderschweißschuh nach einem der vorstehenden Ansprüche, **dadurch gekennzeichnet, dass** an dem Extruderschweißschuh (5) Führungseinrichtungen (31) angeordnet sind.

10. Handschweißextruder (1) zum Verbinden von Kunststoffteilen (18, 19), **gekennzeichnet durch** einen Extruderschweißschuh (5) gemäß einem der vorstehenden Ansprüche.

11. Handschweißextruder nach Anspruch 10, **dadurch gekennzeichnet, dass** der Handschweißextruder (1) auf einem antreibbaren, vorzugsweise federnden Fahrgestell (34) angeordnet ist.

12. Handschweißextruder nach Anspruch 11, **dadurch gekennzeichnet, dass** das Fahrgestell (34) an dem Extruderschweißschuh (5) angeordnet ist.

13. Handschweißextruder nach Anspruch 11, **dadurch gekennzeichnet, dass** der Handschweißextruder (1) einen Führungsholm (35) aufweist.

14. Handschweißextruder nach einem der vorstehenden Ansprüche 11 bis 13, **dadurch gekennzeichnet, dass** das Fahrgestell (34) elektromotorisch angetrieben ist.

15. Handschweißextruder nach einem der vorstehenden Ansprüche 10 bis 14, **dadurch gekennzeichnet, dass** der Handschweißextruder (1) eine Abwickelvorrichtung (36), vorzugsweise mit einer Bremseinrichtung, für einen Kunststoffschweißdraht (37) aufweist.

## Claims

1. An extruder welding shoe (5), preferably for a hand welding extruder (1), which is fastenable to the outlet side of an extruder nozzle (3) of an extruder unit (2), including a material inlet (11), a material outlet (12) and a material flow passage (8) extending between them for a plasticised plastic material to be extruded, and including an internal air guide (22) for preheating air, which has an air inlet (28), an air outlet (27) and an air flow passage (24) connecting them, **characterised in that** the material flow passage (8) has at least one material branching point (9), which divides the material flow passage (8) into material branch flow passages (10, 10⁻), which have respective material outlets (12).

2. An extruder welding shoe as claimed in claim 1, **characterised in that** the air flow passage (24) has at least one air branching point (25), which divides the air flow passage (24) into air flow branch passages (26, 26⁻), which have respective air outlets (27).

3. An extruder welding shoe as claimed in one of the preceding claims, **characterised in that** the material flow passage (8) and/or the air flow passage (24) branch symmetrically with respect to the longitudinal axis of the extruder nozzle (3).

4. An extruder welding shoe as claimed in one of the preceding claims, **characterised in that** a plurality of material branching points (9) and/or air branching points (25) are arranged successively in the flow direction of the plasticised plastic material.

5. An extruder welding shoe as claimed in one of the preceding claims, **characterised in that** the extruder welding shoe (5) is fastenable to the extruder nozzle (3) so as to be rotatable in the peripheral direction.

6. An extruder welding shoe as claimed in one of the preceding claims, **characterised in that** the air inlet (28) is connected to a hot air generator of the hand welding extruder (1) via an adjustable air supply conduit.

7. An extruder welding shoe as claimed in one of the preceding claims, **characterised in that** the material branching point (9) has a blade (20) for dividing the flowing plastic material.

8. An extruder welding shoe as claimed in one of the preceding claims, **characterised in that** the material outlets (12) have a replaceable material outlet nozzle (14), which are preferable arranged on an exchangeable material nozzle plate (7).

9. An extruder welding shoe as claimed in one of the preceding claims, **characterised in that** guide devices (31) are arranged on the extruder welding shoe (5).

10. A hand welding extruder (1) for connecting plastic components (18, 19), **characterised by** an extruder welding shoe (5) as claimed in one of the preceding claims.

11. A hand welding extruder as claimed in claim (10), **characterised in that** the hand welding extruder (1) is arranged on a drivable, preferably resilient, carriage (34).

12. A hand welding extruder as claimed in claim 11, **characterised in that** the carriage (34) is arranged on the extruder welding shoe (5).

13. A hand welding extruder as claimed in claim 11, **characterised in that** the hand welding extruder (11) has a guide bar (35).

14. A hand welding extruder as claimed in one of the preceding claims 11 to 13, **characterised in that** the carriage (34) is driven by an electric motor.

15. A hand welding extruder as claimed in one of the preceding claims 10 to 14, **characterised in that** the hand welding extruder (1) has an unwinding device (36), preferably with a braking device, for a plastic welding rod (37).

## Revendications

1. Semelle (5) de soudage par extrusion, de préférence destinée à une extrudeuse (1) de soudage manuel et pouvant être fixée, côté sortie, à une buse d'extrusion (3) d'une unité d'extrusion (2), comprenant une admission de matière (11), une sortie de matière (12), et un canal (8) d'écoulement de matière qui s'étend entre ces dernières et est dévolu à une matière synthétique plastifiée devant être extrudée, et un système intérieur de guidage (22) dédié à de l'air de préchauffage, qui comprend une admission d'air (28), une sortie d'air (27) et un canal (24) d'écoulement d'air reliant ces dernières, **caractérisée par le fait que** le canal (8) d'écoulement de matière présente au moins une zone (9) de bifurcation de matière qui scinde ledit canal (8) d'écoulement de matière en des canaux (10, 10') de dérivation du flux de matière, respectivement pourvus d'une sortie de matière (12).

2. Semelle de soudage par extrusion selon la revendication 1, **caractérisée par le fait que** le canal (24) d'écoulement d'air présente au moins une zone (25) de déflection d'air qui scinde ledit canal (24) d'écoulement d'air en des canaux (26, 26') de dérivation de l'écoulement d'air, respectivement pourvus d'une sortie d'air (27).

3. Semelle de soudage par extrusion selon l'une des revendications précédentes, **caractérisée par le fait que** le canal (8) d'écoulement de matière, et/ou le canal (24) d'écoulement d'air, bifurque(nt) symétriquement par rapport à l'axe longitudinal de la buse d'extrusion (3).

4. Semelle de soudage par extrusion selon l'une des revendications précédentes, **caractérisée par le fait que** plusieurs points (9) de bifurcation de matière, et/ou points (25) de déflection d'air, sont agencées en succession dans la direction de l'écoulement de la matière synthétique plastifiée.

5. Semelle de soudage par extrusion selon l'une des revendications précédentes, **caractérisée par le fait que** ladite semelle (5) de soudage par extrusion peut être fixée à la buse d'extrusion (3) avec faculté de rotation dans le sens périphérique.

6. Semelle de soudage par extrusion selon l'une des revendications précédentes, **caractérisée par le fait que** l'admission d'air (28) est raccordée à un générateur d'air chaud de l'extrudeuse (1) de soudage manuel, par l'intermédiaire d'un conduit réglable d'amenée d'air.

7. Semelle de soudage par extrusion selon l'une des revendications précédentes, **caractérisée par le fait que** la point (9) de bifurcation de matière présente une lame (20), en vue du clivage de la matière synthétique en circulation.

8. Semelle de soudage par extrusion selon l'une des revendications précédentes, **caractérisée par le fait que** les sorties de matière (12) présentent des buses interchangeables (14) de sortie de matière placées, de préférence, sur une platine remplaçable (7) à buses de décharge de matière.

9. Semelle de soudage par extrusion selon l'une des revendications précédentes, **caractérisée par le fait que** des systèmes de guidage (31) sont implantés sur ladite semelle (5) de soudage par extrusion.

10. Extrudeuse (1) de soudage manuel dévolue à la solidarisation de pièces (18, 19) en matière synthétique, **caractérisée par** une semelle (5) de soudage par extrusion conforme à l'une des revendications précédentes.

11. Extrudeuse de soudage manuel selon la revendication 10, **caractérisée par le fait que** ladite extrudeuse (1) de soudage manuel est installée sur un châssis de roulement (34) pouvant être entraîné, de préférence élastique.

12. Extrudeuse de soudage manuel selon la revendication 11, **caractérisée par le fait que** le châssis de roulement (34) est disposé sur la semelle (5) de soudage par extrusion.

13. Extrudeuse de soudage manuel selon la revendication 11, **caractérisée par le fait que** ladite extrudeuse (1) de soudage manuel est pourvue d'une barre de guidage (35).

14. Extrudeuse de soudage manuel selon l'une des revendications précédentes 11 à 13, **caractérisée par le fait que** le châssis de roulement (34) est entraîné par moteur électrique.

15. Extrudeuse de soudage manuel selon l'une des revendications précédentes 10 à 14, **caractérisée par le fait que** ladite extrudeuse (1) de soudage manuel présente un dispositif de dévidage (36), de préférence équipé d'un système de freinage, affecté à un fil de soudage (37) en matière synthétique.
